# EUROPEAN PATENT APPLICATION

(11) **EP 0 724 211 A2**
(43) Date of publication of application: **31.07.1996**
(21) Application number: 96300538.4
(22) Date of filing: 25.01.1996
(51) Int. Cl.: G06F 3/14

(54) **Computer system with decentralised storage of video sequences**

(30) Priority: 26.01.1995 US 378342
(71) Applicant: NCR International, Inc., Dayton, Ohio 45479 (US)
(72) Inventor: McCollum, Tab A., Camden, OH 45311 (US)
(74) Representative: Robinson, Robert George

(57) **Abstract**

The invention concerns a system in which multiple resources are stored, some of which contain video information. The invention allows a user to select a particular video resource, and play a sample of the video resource, such as a 5-second clip.

## Description

The present invention relates to a computer system, and in particular to a computer system which enables storage of data on video tape.

The invention concerns previewing a resource stored in a computer system. Resources include all information storable in dowloadable format, such as data files, video files, audio files, and animation files.

In particular the present invention relates to a system which stores resources, such as computer files (which include data files, video files, audio files, and so on) at multiple different computer sites, which can be located throughout the world.

A user, who can be located at any of the sites, or linked to a so called Continuous Learning System (CLS) via a communication channel, such as a cellular modem, can obtain a catalog of all files contained in the system, to which the user is allowed access. The user can retrieve any file desired. An example will illustrate one context in which the invention is useful.

Assume that the user is a journalist who is assembling a documentary video tape on the election campaign of a particular politician. Assume that several news services have covered the politician's campaign, and have stored video tapes, or video clips within CLS. The journalist wishes to incorporate some of the video tapes into the documentary.

However, the journalist does not wish to view every tape from beginning-to-end, because of the time required. The journalist wishes to view a sample of each, and then select those which seem most relevant. The invention allows this sampling.

An object of the invention is to provide apparatus for previewing resources stored in a computer system.

According to the present invention there is provided a system of computers which store resources, some of which take the form of video sequences, characterized by means for allowing a user to select a video sequence; and means including a display, for playing a sample of said video sequence to the user.

An embodiment of the present invention will now be described by way of example, with reference to the accompanying drawings, in which:-
Fig. 1 illustrates distributed storage of RESOURCES;
Fig. 2 is a hypothetical representation of storage of video frame data in memory;
Fig. 3 illustrates a video preview window on a display; and
Fig. 4 is a high-level logic diagram which one form of the invention follows.

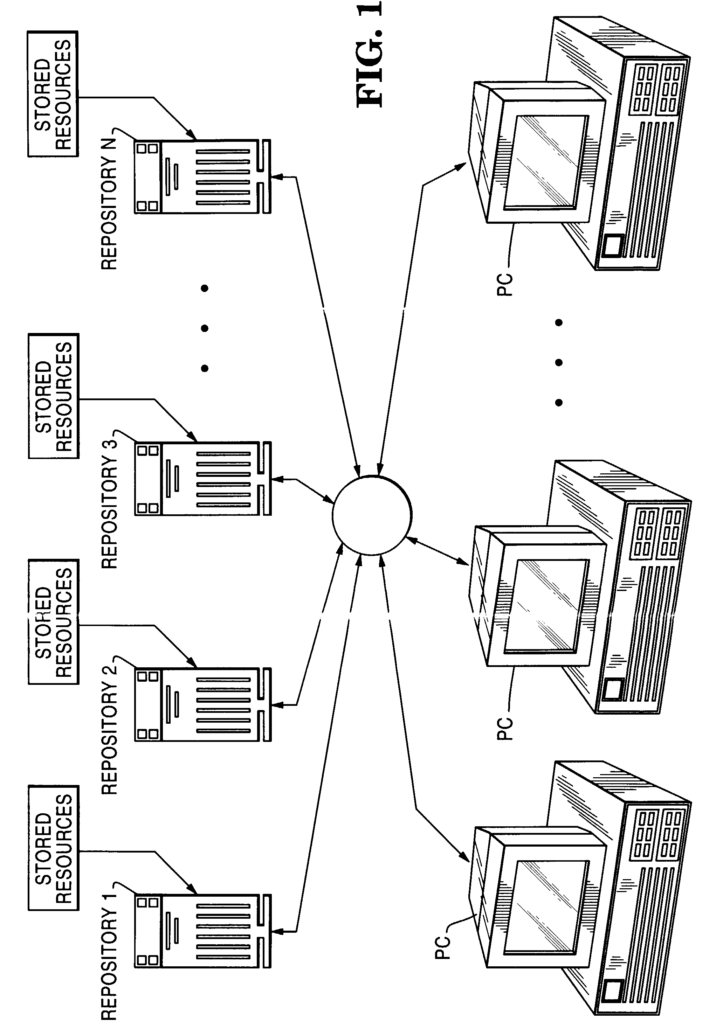

Fig. 1 illustrates a system in which multiple RESOURCES are stored in different REPOSITORIES, at different locations. The term "RESOURCE" can include anything which has potential value in terms of recovering knowledge. RESOURCES include, for example, information which can be downloaded, such as data, files, computer applications, computer-managed instruction. RESOURCES also include systems, such as the commercially available information services known as CompuServe and Prodigy, because these systems allow recovery of knowledge.

RESOURCES can be classified as either static or dynamic. The RESOURCES discussed above are of the static type, because, at the time of recovery, they are pre-existing.

Dynamic RESOURCES are not pre-existing at the time of recovery, but come into existence at the time of recovery. For example, when television news media cover an event in real time, such as the State-of-the-Union Address of the President of the United States, information contained in the Address becomes available for recovery (if the news media is linkable to CLS or an equivalent). The information was not pre-existing, but came into existence at the time recovery became possible. (Of course, there is an extremely short time delay between the time of the Address and time recovery becomes possible. This time is considered negligible, and does not render the Address pre-existing.)

In the case of a RESOURCE taking the form of a sequence of frames, such as a video, or the like, the invention allows a user to specify (a) a starting time and (b) a time duration. The invention then locates the frame, within the RESOURCE, occurring at the starting time. The invention retrieves that frame, together with sufficient subsequent frames to span the specified duration, and plays the sequence of frames on the user's display.

Drivers suitable for playing the frames are commercially available, and within the prior art.

For example, assume that a particular sequence runs at 25 frames per second. (Each frame is analogous to a single image, or frame, in a 35 mm film.) Assume that the user specifies a beginning time of 10 seconds, and a duration of 5 seconds. (If the user specifies a duration which is extremely short, such as equal to a single frame, the invention, by default, displays the single frame for a default length of time, such as two seconds.)

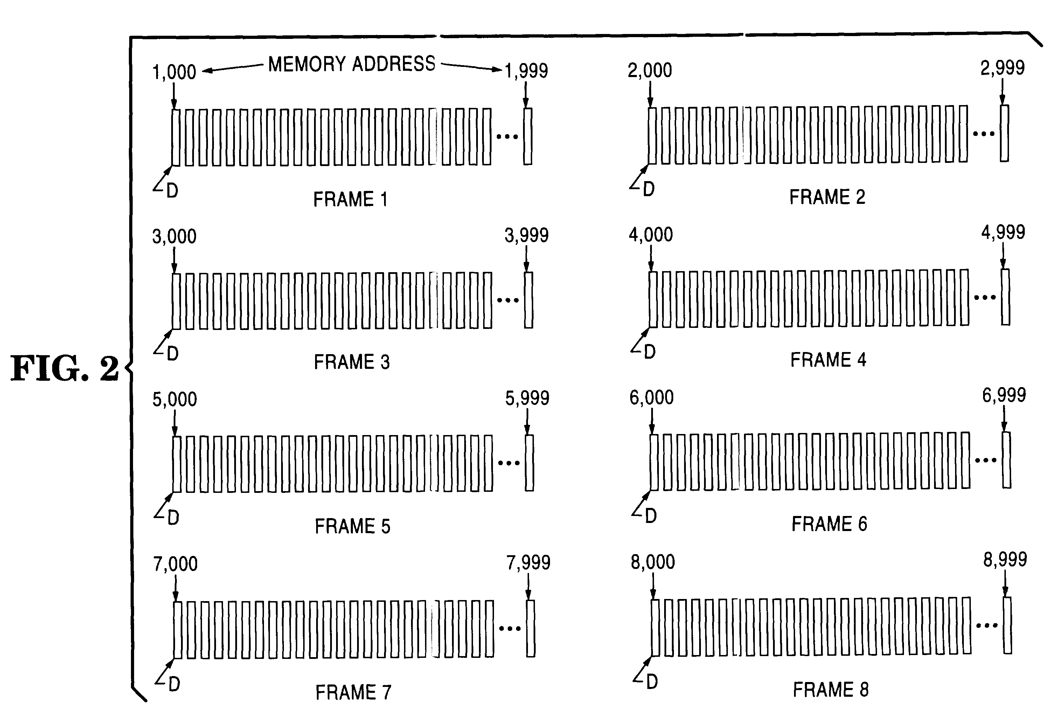

Fig. 2 is a hypothetical, but realistic, representation of how this sequence can be stored in memory. Each frame consists of a group of data, as indicated, and is assumed to occupy 1,000 memory addresses. Delimiters D indicate the beginning address of each frame.

Because the user specified a starting time of ten seconds, the invention locates the frame which occurs at ten seconds from the beginning, which is frame 251 (because, at 25 frames per second, 250 frames will have run in the first ten seconds). (Figure 2 does not show FRAME 251.) The invention then retrieves the data representing the subsequent 250 frames (25 frames/sec x 5 sec), and plays these retrieved frames.

The approach to locating the initial frame will, of course, depend on the format in which the frame sequence was stored. For example, one format may locate an identical marker at the beginning of each frame, such as the D's in Fig. 2. To locate a given frame, such as the 251st, one simply counts markers until one reaches 251.

Another format may use markers which identify each frame by number, such as the first, second, etc. Thus, the 251st frame will reside adjacent a marker reading "251."

Yet another format may use markers which identify frames according to occurrence real time. For example, the first frame would reside adjacent a marker indicating 1/25, for 1/25 second. The second frame adjacent a marker indicating 2/25, and so on.

The particular format of the frame sequence will be readily ascertainable, either from the manufacturer of the software which generated the frame-data, or from investigation of the frame sequence itself. This identifying data is preferably stored, if necessary, in a document called a PROFILE.

In brief, a PROFILE is a file which contains identifying data about a RESOURCE. For a RESOURCE such as a frame sequence, one piece of identifying data is the data format, addressing protocol, and other information needed to identify a suitable program, or driver, for playing the frame sequence, or for writing software to perform the playing. This identifying data is preferably contained in the PROFILE.

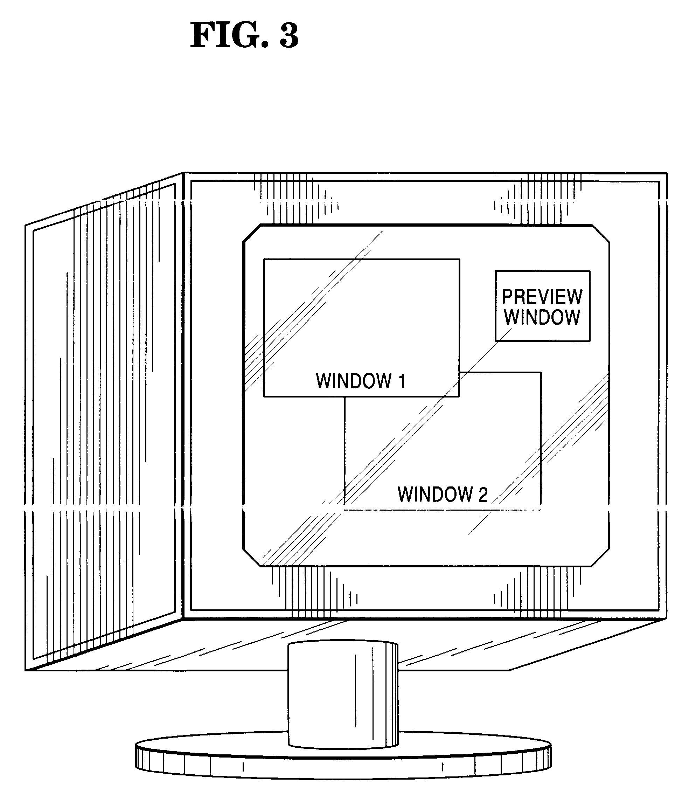

The invention displays the sequence of frames within a window, which occupies part of the display of the user, as indicated in Fig. 3. That is, the entire display is not devoted to the preview-sample. One reason is that the user may wish to monitor other tasks being executed on the remainder of the display, while the previewing is being done.

Generating such a window is known in the art, and can be assisted by a commercially available package called the "Windows Software Developer's Kit," available from Microsoft Corporation, Redmond, Washington. This kit is used in conjunction with the graphical user interface named "Windows," also available from Microsoft.

It is possible that the preview presented to the user will not provide the information which the user sought to obtain trom the file. The invention, at the end of the preview, asks the user whether the preview should be extended, or whether another preview, taken from a different location in the sequence, should be played. If the user requests an extension, the invention retrieves the frames for the five-second sequence, which follow the sequence just played for the user, and plays them.

If the user requests a different sample, the invention prompts for a new starting time, and possibly a new duration.

The invention can be designed to automatically play samples taken from different locations, until the user orders the invention to stop. For example, the invention may ask the user to specify a starting time, a duration, and a skip time. If these times are 1 second, 2 seconds, and 10 seconds, respectively, then the invention will play a succession of 2 second clips, representing the 2 second sequences starting at 1 second, 11 seconds, 21 seconds, 31 seconds, and so on, until the user orders termination, or until the end of the video is reached.

It is significant that only the frame-data needed for the sequence to be displayed (or played, if audio) is retrieved, and not the entire video sequence itself. In one of the examples above, the data retrieved was 250 frames' worth (25 frames/sec x 5 sec). In general, this will be a small fraction of the overall data representing the video sequence itself. For example, if the video sequence is a movie which is 100 minutes long, which is equivalent to 6,000 seconds, the five-second preview represents about 5/6,000 or a fraction of a percent of the overall data.

The retrieval of a small amount of data for previewing is preferred, because video images can require large amounts of data. One megabyte per frame is not uncommon.

The invention can provide previews of non-video resources, such as word-processing documents or graphical images. Facilities for presenting such still previews are available in the prior art. The invention, however, presents the previews in a discrete window on the display. Further, the invention can present still, non-moving, previews, as well as sequential previews, such as animation and video sequences, in the same window. Still further, the user need not be concerned with the type of preview (still or moving), because the invention automatically calls the driver necessary to present the preview.

It may be preferable to allow a user to specify the starting time in terms of a percentage, which is applied to both video samples, and to still samples.

For example, if the user specifies ten percent, then the sample will be taken starting at ten seconds in a 100-second video (10 equals ten percent of 100). Similarly, if the user selects a word-processing document which is 20 pages long, then the sample begins on page 2 (2 is ten percent of 20).

With this approach, the user need not be concerned with the fact that some resources are still-type, and others are moving-type.

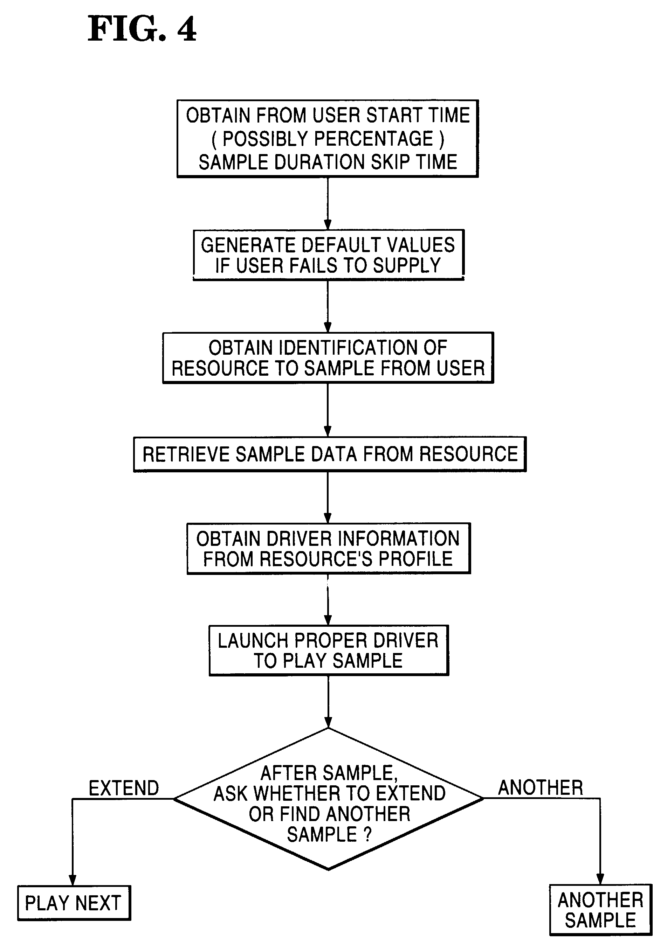

Figure 4 is a high-level flow chart illustrating logic followed by one form of the invention.

### Definitions

"CLS" is an acronym for Continuous Learning System, which is a system having the following minimum capabilities:
a) ability to store resources at multiple, distributed locations;
b) ability of allowinq a user, who is remote from the distributed locations (except possibly one location, where the user can, but need not, be located), to view a list of resources available to the user; and
c) ability to retrieve resources selected by the user, and deliver the retrieved resource to the user's computer.

A system having these characteristics can be called a system having CLS characteristics.

"Location" refers to location, measured by time (or other parameter, such as number of frames), from the beginning of a video.

One definition of "video" is a sequence of frames, played on a computer display. "Video" may, or may not, include audio information, such as a "sound track."

## Claims

1. A system of computers which store resources, some of which take the form of video sequences, characterized by means for allowing a user to select a video sequence; and means including a display, for playing a sample of said video sequence to the user.

2. A system according to claim 1, characterized in that one or more of said means for displaying a sample of said video sequence is arranged to enable said sample is to be played in a window on said display.

3. A system according to either claim 1, or claim 2, characterized in that said resources taking the form of video sequences are associated with one or more profiles containing information used in selecting said means for playing the video sequence.

4. A system according to any one of the preceding claims, characterized by means for allowing the user to select a starting time and duration of said sample, and means for causing said sample to conform to the specified starting time and duration.

5. A system according to claim 4, characterized by means for playing a second sample, after said sample.

6. A system according to claim 5, characterized by means for allowing the user to specify a skip interval between the end of said first sample and the beginning of said second sample; and means for successively retrieving frame information of the specified time duration, beginning at skip intervals.

7. A system according to any one of the preceding claims, characterized by means for storing first-type information which is customarily displayed as a still image; and second-type information which is customarily displayed as a sequence of images; and means for allowing a user to select either first-type or second type information; and displaying a sample of the information selected.

8. A system according to any one of the preceding claims, cit the playing of a sample does not require retrieval of an entire resource.
